# EUROPÄISCHE PATENTSCHRIFT

(11) **EP 3 263 376 B1**
(45) Veröffentlichungstag und Bekanntmachung des Hinweises auf die Patenterteilung: **08.08.2018**
(21) Anmeldenummer: 17171058.5
(22) Anmeldetag: 15.05.2017
(51) Int. Cl.: B60H 1/34, F24F 13/15

(54) **LUFTAUSSTRÖMER**
AIR VENT
DIFFUSEUR D'AIR

(30) Priorität: 27.06.2016 DE 202016103388 U
(43) Veröffentlichungstag der Anmeldung: 03.01.2018
(73) Patentinhaber: GRAMMER Interior Components GmbH, 74736 Hardheim (DE)
(72) Erfinder: Link, Manfred, 69427 Mudau-Reisenbach (DE); Link, Gunter, 74722 Buchen - Hainstadt (DE); Schreck, Christian, 97953 Königheim (DE); Stehle, Pierre, 61191 Rosbach (DE)
(74) Vertreter: Ostriga Sonnet Wirths & Vorwerk

(56) Entgegenhaltungen:
- DE-A1- 10 330 621
- DE-A1-102010 014 528
- JP-A- S57 124 647
- JP-A- S61 262 543
- US-A1- 2007 123 158

## Beschreibung

Die Erfindung betrifft einen Luftausströmer mit einem Gehäuse, welches mehrere Lamellen umfasst, die horizontal oder vertikal verlaufen und schwenkbar in dem Gehäuse angeordnet sind.

Ein solcher Luftausströmer ist beispielsweise aus der DE 100 57 421 A1 bekannt. Dieser Luftausströmer weist in der Ebene der Luftaustrittsöffnung mehrere parallel zueinander ausgerichtete Lamellen auf, die über eine Einstellvorrichtung mittels eines Bedienelementes gleichzeitig und gemeinsam verschwenkbar sind, um eine Änderung in der Ausströmrichtung zu erzielen. Bei diesem Luftausströmer sind die Lamellen durch ein Getriebe miteinander verbunden, so dass diese aus einer neutralen Austrittsposition gemeinsam und parallel zueinander ausgerichtet in eine erste und eine zweite gegenläufige Endposition durch eine Schwenkbewegung des Bedienelementes veränderbar sind. Ein weiterer bekannter Luftausströmer ist beispielsweise aus der DE 10 2010 014 528 bekannt. Dieser Luftausströmer weist schwenkbar in dem Gehäuse angeordneten Lamellen auf, die durch eine Einstellvorrichtung ansteuerbar sind, wobei die Ansteuerung der Einstellvorrichtung zur Luftströmungsrichtungsänderung mit zumindest einem Stellelement aus einer Formgedächtnislegierung ansteuerbar ist. Dieser Luftausströmer ermöglicht aber nur eine Einstellung der Austrittsrichtung der Luftströmung. Die Anforderungen an solche Luftausströmer steigen stetig an. Eine alleinige Änderung in der Austrittrichtung der Luftströmung genügt nicht mehr. Vielmehr besteht auch das Bedürfnis eine diffuse Luftausströmung anzusteuern.

Der Erfindung liegt die Aufgabe zugrunde, einen Luftausströmer vorzuschlagen, der sowohl eine Änderung in der Austrittsrichtung der Luftströmung durch Einstellung einer Position der Lamellen ermöglicht als auch eine diffuse Luftausströmung erzeugt.

Diese Aufgabe wird durch einen Luftausströmer gelöst, bei welchem ergänzend zur Einstellvorrichtung, welche zur gemeinsamen und gleich ausgerichteten Anordnung der Lamellen sowohl in einer Ausgangsposition beziehungsweise neutralen Position als auch in einer Schwenkposition durch eine Schwenkbewegung zur Änderung der Anströmrichtung ansteuerbar ist, zumindest ein Stellelement aus einer Formgedächtnislegierung vorgesehen ist, welches die Lamellen zur Einstellung einer diffusen Luftströmung ansteuert. Durch das zumindest eine Stellelement aus der Formgedächtnislegierung können die Lamellen abweichend zur Ansteuerung einer Schwenkbewegung durch die Einstellvorrichtung zur Ausrichtung der Luftaustrittrichtung derart positioniert werden, dass anstelle einer laminaren und gerichteten Luftströmung eine diffuse Luftströmung erzeugt wird.

Bevorzugt ist vorgesehen, dass die Lamellen ausgehend von einer Ausgangsposition durch das Stellelement aus der Formgedächtnislegierung in die Position der diffusen Luftströmung ansteuerbar ist, wobei ausgehend von einer mittigen Lamelle oder einer Steuerlamelle die erste rechte und linke benachbarte Lamelle in eine gegenüber der parallelen Ausrichtung zur mittigen Lamelle vergrößerten Öffnungswinkel ausgerichtet ist und die zweite rechte und linke benachbarte Lamelle eine gegenüber ersten rechten und linken benachbarten Lamelle wiederum vergrößerten Öffnungswinkel aufweist. Dadurch nehmen die Lamellen ausgehend von der mittleren Lamelle zum äußeren Rand der Luftaustrittsöffnung einen zunehmend größeren Öffnungswinkel ein, so dass dadurch eine diffuse Luftausströmung erzeugt wird. Beispielsweise kann zwischen der mittigen Lamelle und einer ersten benachbarten Lamelle ein Öffnungswinkel von 11°, zwischen der ersten benachbarten und zweiten benachbarten Lamelle wiederum ein Öffnungswinkel von 11° vorgesehen sein, wobei in Summe von der mittleren zur zweiten benachbarten Lamelle dann ein Öffnungswinkel von 22° beispielsweise gegeben ist. Dies setzt sich für weitere benachbarte und weitere außen liegende Lamellen analog fort.

Die Einstellvorrichtung des Luftausströmers umfasst eine Führungsschiene, in der ein mit jeweils einer Lamelle gekoppelter Schieber aufgenommen ist und jeder Schieber im Abstand der Lamelle in einer lösbaren Rastposition zur Führungsschiene angeordnet ist. Dadurch wird ermöglicht, dass mit einem Bedienelement die Einstellvorrichtung betätigt werden kann, so dass die Schieber gemeinsam in einer vorgesehenen Position zusammen mit der Führungsschiene verfahrbar sind, um die Änderung in der Ausströmrichtung zu erzielen. Durch die lösbare Rastposition zwischen dem Schieber und der Führungsschiene ist ermöglicht, dass die Schieber aufgrund der Ansteuerung mit dem Stellelement aus der Formgedächtnislegierung auch die lösbare Rastposition verlassen können, um daraufhin voneinander abweichenden Öffnungswinkel der Lamellen zueinander zur Erzeugung der diffusen Luftausströmung einzunehmen.

Vorteilhafterweise ist vorgesehen, dass an jedem Schieber ein Koppelelement, insbesondere eine gabelförmige oder U-förmige Aufnahme vorgesehen ist, in der ein an einem Endabschnitt der Lamelle angeordneter Zapfen geführt ist. Dies ermöglicht eine einfache Verbindung zwischen der Lamelle und dem Schieber, um die ortsfest am Gehäuse angeordnete Lamelle schwenkbar anzusteuern.

Eine weitere vorteilhafte Ausgestaltung der Erfindung sieht vor, dass das Bedienelement der Einstellvorrichtung zur Änderung der Ausströmrichtung des Luftstromes eine Verschiebebewegung der Führungsschiene ansteuert. Dadurch können alle Lamellen gleichzeitig eine Schwenkbewegung durchführen und gleich ausgerichtet, insbesondere parallel zueinander ausgerichtet, innerhalb des gesamten Schwenkbereichs eingestellt und verändert werden. Vorteilhafterweise ist vorgesehen, dass die Verschiebebewegung der Führungsschiene parallel zur Ebene der Luftaustrittsöffnung angesteuert ist. Dadurch kann auch eine platzsparende Anordnung innerhalb eines Gehäuses des Luftausströmers geschaffen sein. Das Bedienelement kann manuell betätigbar sein. Bevorzugt kann eine durch eine Blende geführte Verschiebebewegung vorgesehen sein. Alternativ kann das Bedienelement als ein elektrischer Schalter oder Taster oder auch als ein Touchscreen ausgebildet sein, durch welchen ein elektrischer Antrieb eine Verschiebebewegung der Führungsschiene ansteuert.

Zur Ansteuerung der Lamellen ist vorteilhafterweise an einer mittigen Lamelle oder einer Steuerlamelle ein Zapfen vorgesehen, an welchem das Bedienelement der Einstellvorrichtung angreift und durch eine Verschiebe- oder Drehbewegung des Bedienelementes eine Verschiebebewegung der Führungsschiene angesteuert wird. Diese Verschiebebewegung wird über den Zapfen der mittigen Lamelle oder Steuerlamelle auf den damit gekoppelten Schieber und von dem Schieber auf die Führungsschiene übertragen.

Zur Ansteuerung der diffusen Luftausströmung ist zumindest ein Stellelement aus der Formgedächtnislegierung mit oder zwischen zwei oder mehreren Schiebern der Führungsschiene gekoppelt. Vorzugsweise erstreckt sich das zumindest eine Stellelement entlang allen Schiebern, und jeder Schieber ist durch einen festen Angriffspunkt mit dem zumindest einen Stellelement verbunden. Dies ermöglicht eine gleichzeitige Ansteuerung von allen Schiebern mit dem zumindest einen Stellelement und somit die Ansteuerung aller Lamellen gleichzeitig. Vorteilhafterweise erstreckt sich ein Stellelement von einem ersten bis zum letzten Schieber, so dass eine Art Hintereinanderschaltung oder Reihenschaltung der Schieber besteht. Dies ermöglicht eine Stellbewegung der Schieber in Abhängigkeit zueinander, um die diffuse Luftausströmung zu steuern.

Zur Ansteuerung der diffusen Luftausströmer ist bevorzugt vorgesehen, dass jeder Schieber ein erstes Rastelement aufweist, welches mit einem zweiten Rastelement der Führungsschiene zusammenwirkt und eine lösbare Rastverbindung bildet. Dadurch wird ermöglicht, dass bei einer Aktivierung des Stellelementes aus einer Formgedächtnislegierung der Schieber gegenüber seiner Rastposition gelöst werden und somit eine abweichende Position zum benachbarten Schieber einnehmen kann, um die voneinander abweichenden Öffnungswinkel der benachbarten Lamellen zueinander anzusteuern.

Die Ansteuerung der Stellbewegung der Lamellen für die diffuse Luftausströmung erfolgt durch eine Aktivierung, insbesondere Bestromung, des Stellelementes aus der Formgedächtnislegierung. Die freien Längen der Stellelemente zwischen zwei Schiebern werden dabei verkürzt, wodurch die Öffnungswinkel eingestellt werden. Sofern beispielsweise die mittlere Lamelle oder Steuerlamelle mit einer lösbaren Rastverbindung versehen ist, die ein höheres Lösemoment als die benachbarte Rastverbindung aufweist, werden die rechts und links benachbarten Schieber zur mittigen Lamelle oder Steuerlamelle aus der Rastposition gelöst. Durch die betragsmäßig gleiche Verkürzung der freien Länge zwischen zwei Schiebern, wird jedoch am äußersten Schieber eine größere Fahrstrecke angesteuert als an dem unmittelbar zur mittigen Lamelle oder Steuerlamelle benachbarten Schieber, so dass dadurch auch ein größerer Öffnungswinkel eingestellt wird.

Gemäß einer bevorzugten Ausführungsform des Luftausströmers weist der Schieber, welcher einer mittigen Lamelle oder einer Steuerlamelle zugeordnet ist, eine lösbare Rastverbindung mit einer höheren Lösekraft oder einem höheren Lösemoment als die lösbare Rastverbindung der benachbarten Schieber auf, welche die zur mittigen Lamelle oder Steuerlamelle benachbarten Lamellen ansteuert. Dadurch bleibt bei der Ansteuerung des Stellelementes beispielsweise die mittige Lamelle oder Steuerlamelle ausgerichtet, und die dazu benachbarten Lamellen nehmen eine Winkelstellung gegenüber der mittigen Lamelle oder Steuerlamelle ein. Mit zunehmendem Abstand der Lamellen zur mittigen oder Steuerlamelle nehmen diese dann bevorzugt eine immer größer werdende Winkelstellung ein.

Alternativ kann der Schieber einer mittigen oder einer Steuerlamelle eine kraft- und/oder formschlüssige Verbindung mit dem Stellelement aufweisen. Somit kann anstelle einer höheren Lösekraft oder einem höheren Lösemoment der lösbaren Rastverbindung auch eine feste Verbindung zwischen dem Steuerelement und dem Schieber vorgesehen sein, der einer mittigen Lamelle oder einer Steuerlamelle zugeordnet ist.

Bevorzugt ist vorgesehen, dass zwischen zwei Schiebern ein Rückstellelement, insbesondere ein Federelement, vorgesehen ist. Dadurch kann nach der Aktivierung des Stellelementes aus der Formgedächtnislegierung eine selbständige Rücksetzung der Schieber in die jeweilige lösbare Rastposition an der Führungsschiene erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht von vorne auf einen Luftausströmer,
- Figur 2: eine perspektivische Ansicht von hinten auf den Luftausströmer gemäß Figur 1,
- Figur 3: eine schematische Schnittansicht des Luftausströmers gemäß Figur 1,
- Figur 4: eine schematische Schnittansicht entlang der Linie III-III in Figur 3,
- Figur 5: eine schematische Schnittansicht entlang der Linie IV-IV in Figur 3,
- Figur 6: eine weitere schematische Schnittansicht des Luftausströmers gemäß Figur 1,
- Figur 7: eine schematische Schnittansicht des Luftausströmers mit einer ersten Ausrichtung der Lamellen,
- Figur 8: eine schematische Schnittansicht des Luftausströmers gemäß Figur 1 mit einer zweiten Ausrichtung der Lamellen,
- Figur 9: eine schematisch vergrößerte Anordnung einer Einstellvorrichtung und eines thermischen Stellelementes aus einer Formgedächtnislegierung zur Änderung der Ausströmrichtung in einer Ausgangsposition,
- Figur 10: eine schematische Schnittansicht des Luftausströmers gemäß Figur 1 mit einer Anordnung der Lamellen für eine diffuse Luftausströmung, und
- Figur 11: eine schematisch vergrößerte Anordnung der Einstellvorrichtung und des thermischen Stellelementes aus der Formgedächtnislegierung in einer Anordnung für eine diffuse Luftausströmung gemäß Figur 10.

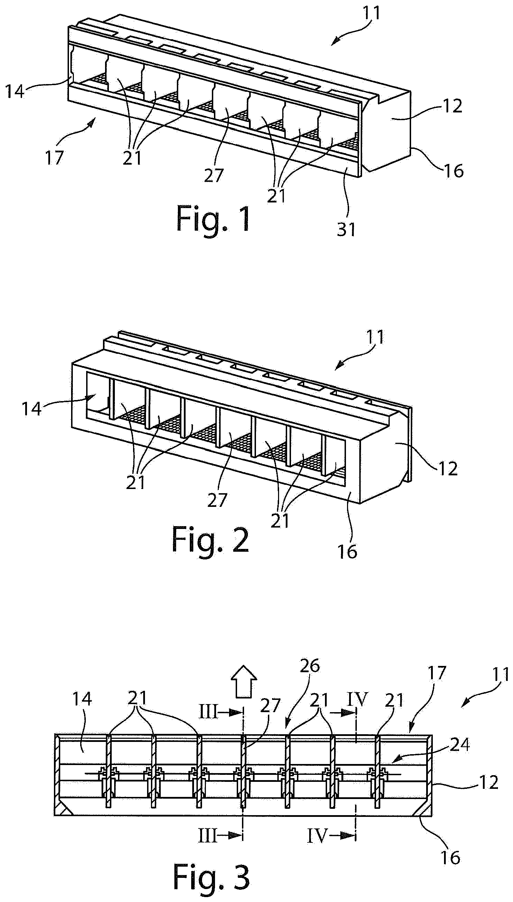

In Figur 1 ist eine perspektivische Ansicht von vorne und in Figur 2 eine perspektivische Ansicht von hinten auf einen Luftausströmer 11 dargestellt. Der Luftausströmer 11 umfasst ein Gehäuse 12 mit einem Luftleitkanal 14. Dieser Luftkanal 14 ist durch eine hintere Anschlussfläche 16 des Gehäuses 12 und einer Luftaustrittsöffnung 17 an der Vorderseite des Gehäuses 12 begrenzt. Die Luftaustrittsöffnung 17 liegt bevorzugt in einer Stirnseite 19 des Gehäuses 12, welche auch als eine Dekoroberfläche ausgebildet sein kann. Im Ausführungsbeispiel sind mehrere Lamellen 21, 27 im Luftkanal 14 eingesetzt. Diese sind beispielsweise vertikal ausgerichtet. Alternativ können die Lamellen 21, 27 auch horizontal ausgerichtet sein. An einem Boden 23 des Gehäuses 12 ist eine Einstellvorrichtung 24 vorgesehen, durch welche eine Schwenkbewegung der Lamellen 21, 27 eingeleitet wird.

In Figur 3 ist eine schematische Schnittansicht des Luftausströmers 11 dargestellt. Aus dieser Schnittansicht ist zu entnehmen, dass die Lamellen 21, 27 in einer Ausgangsposition 26 oder neutralen Position angeordnet sind, so dass eine Ausströmrichtung entlang einer Längsmittelachse des Luftkanales 14 erfolgt.

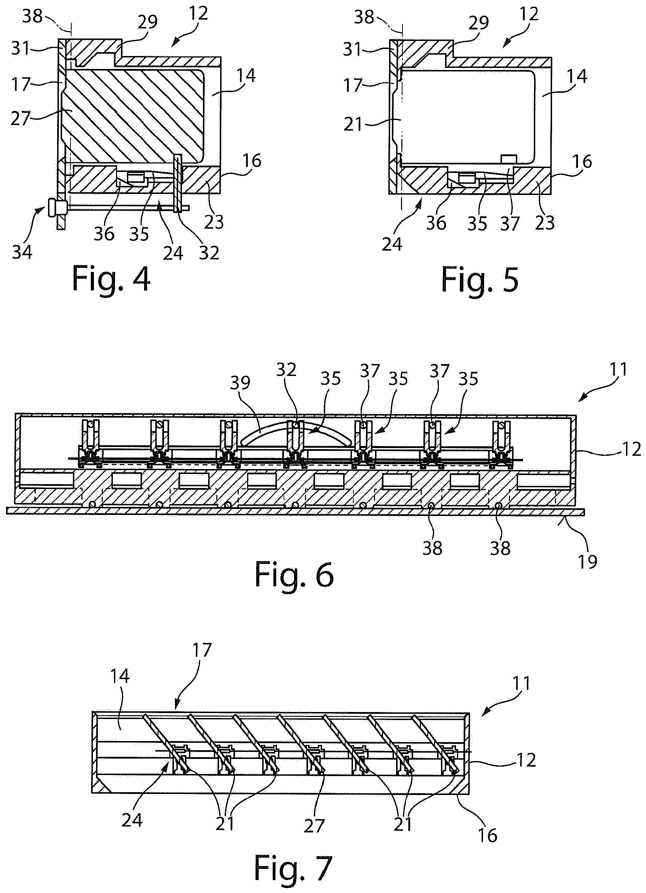

In Figur 4 ist eine schematische Schnittansicht entlang der Linie III-III in Figur 3 dargestellt. Diese Schnittansicht zeigt eine mittige Lamelle oder eine Steuerlamelle 27. Diese Steuerlamelle 27 wie auch die weiteren Lamellen 21 sind beispielsweise über Steckzapfen 28 in dem Gehäuse 12 schwenkbar gelagert. Beispielsweise kann an einer Decke 29 und dem Boden 23 jeweils eine U-förmige Ausnehmung vorgesehen sein, so dass die Lamellen 21 von der Luftaustrittsseite her in den Luftkanal 14 eingesteckt werden und ein Steckzapfen 28 in der U-förmigen Ausnehmung eingreifen, um darauffolgend eine Blende 31 an dem Gehäuse 12 zu befestigen, insbesondere aufzuklipsen, um dadurch die Steckzapfen 28 drehbar in der Decke 29 und dem Boden 23 des Gehäuses 12 zu fixieren. Alternativ können die Lamellen 21, 27 über Federlaschen in Bohrungen im Gehäuse 12 eingesetzt sein.

Die Steuerlamelle 27 weist lufteintrittsseitig in das Gehäuse 12 einen Steuerzapfen 32 auf, der sich durch den Boden 23 des Gehäuses 12 hindurch nach außen erstreckt. An diesem Steuerzapfen 32 greift ein Bedienelement 34 an, welches unmittelbar oder mittelbar über Gestänge oder Getriebe oder dergleichen mit dem Steuerzapfen 32 verbunden ist. Der Steuerzapfen 32 ist wiederum mit einem Schieber 35 gekoppelt, der wiederum von einer Führungsschiene 36 aufgenommen ist.

In Figur 5 ist eine schematische Schnittansicht entlang der Linie IV-IV in Figur 3 dargestellt. Dabei ist eine Lamelle 21 in einer Seitenansicht innerhalb des Gehäuses 12 dargestellt. Die schwenkbare Aufnahme dieser Lamelle 21 entspricht der Steuerlamelle 27. An einem endseitigen Abschnitt der Lamelle 21 ist ein Führungszapfen 37 vorgesehen, der gegenüber dem Steuerzapfen 32 verkürzt ausgebildet ist, so dass dieser sich nur teilweise in den Boden 23 erstreckt, so dass dieser Führungszapfen 37 mit einem Schieber 35 der Führungsschiene 36 gekoppelt ist. Alle Lamellen 21 benachbart zur Steuerlamelle 27 sind mit solchen Führungszapfen 37 versehen, so dass die Ansteuerung der Lamellen 21, 27 gemeinsam über eine Verfahrbewegung der Führungsschiene 36 erfolgt, welche gleichzeitig eine Verfahrbewegung der jeweiligen Schieber 35 relativ zur Schwenkachse 38 der Lamellen bewirkt.

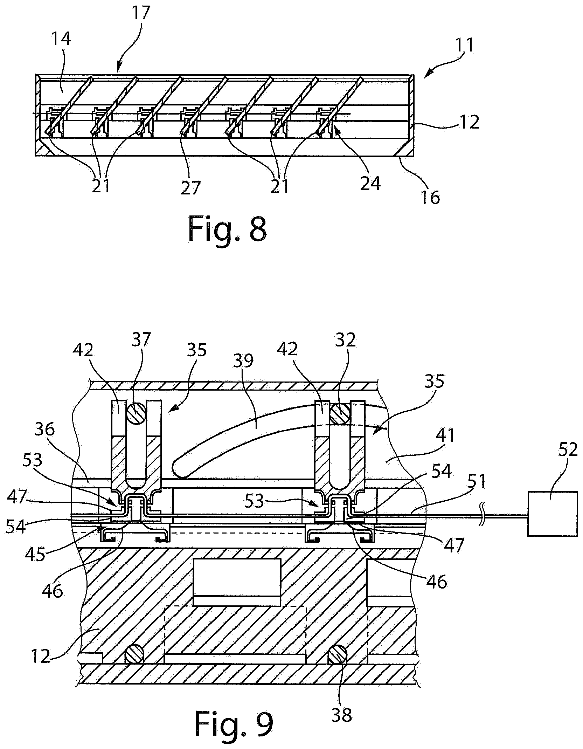

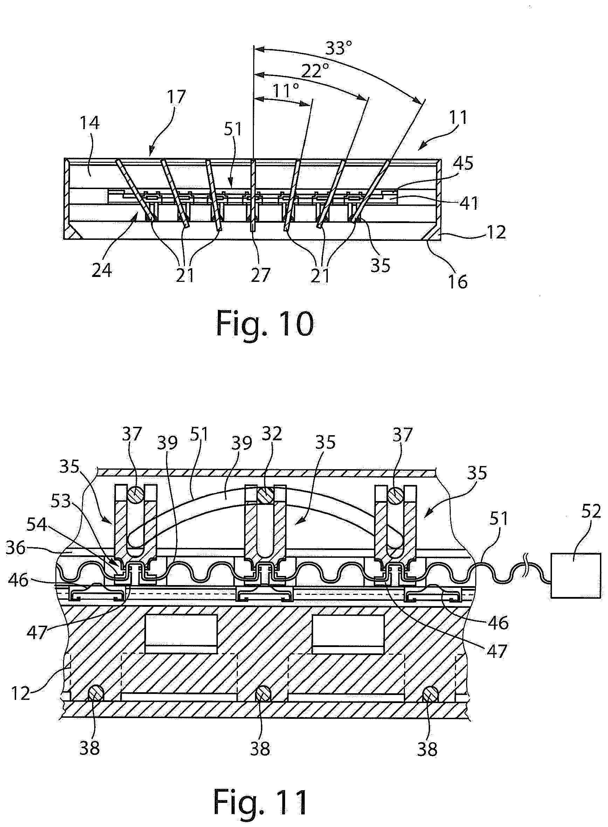

In Figur 6 ist eine weitere schematische Schnittansicht des Luftausströmers 11 zu Figur 3 dargestellt. Die Schnittebene liegt zwischen den Lamellen 21, 27 und einem Boden 23 im Gehäuse 12. Dadurch wird der Aufbau der Einstellvorrichtung 24 verdeutlicht. Jede Lamelle 21, 27 ist um eine Schwenkachse 38 schwenkbar am Gehäuse gelagert. In Figur 6 ist ein Stummel beziehungsweise ein Zapfen der Lamellen 21 und der Steuerlamelle 27 in der Schwenkachse 38 dargestellt. Diesem gegenüberliegend ist der Steuerzapfen 32 der Steuerlamelle 27 als auch die weiteren Führungszapfen 37 der Lamellen 21 dargestellt. An diesem Steuerzapfen 32 und Führungszapfen 37 greifen jeweils Schieber 35 an, die in der Führungsschiene 36 verfahrbar angeordnet sind. Dies wird nachfolgend noch anhand von Figur 9 und 11 näher beschrieben. An oder in dem Boden 23 des Gehäuses 12 ist eine Führung 39, insbesondere eine Führungsnut, vorgesehen. Durch eine Betätigung des Bedienungselementes 34, welches beispielsweise verschiebbar in der Blende 31 geführt ist, wird der Steuerzapfen 32 nach rechts oder nach links geschwenkt und entlang der Führungsnut 39 verfahren. Dadurch wird eine Verfahrbewegung der Führungsschiene 36 eingeleitet, so dass alle Schieber 35 zusammen mit der Führungsschiene 36 entsprechend nach links oder rechts verfahren werden können. Dabei kann der Steuerzapfen 32 innerhalb der gabelförmigen Ausgestaltung des Schiebers 35 nach innen wandern. Dadurch wird eine kreisbogenförmige Bewegung des Steuerzapfens 32 in eine translatorische Bewegung der Führungsschiene 36 umgesetzt. Die Steuerlamelle 27 und die weiteren Lamellen 21 werden um die Schwenkachse 38 geschwenkt.

Anstelle des Bedienelementes 34, welches manuell betätigbar ist, kann auch eine motorische Ansteuerung vorgesehen sein. Dabei kann eine Verschiebebewegung der Lamellen 21 über das Bedienelement 34 angesteuert werden. Es kann auch direkt eine Verschiebebewegung der Führungsschiene 36 angesteuert werden. Die motorische Ansteuerung kann durch eine Druck- oder Steuertaste oder über einen Touchscreen erfolgen.

In Figur 7 ist eine schematische Schnittansicht des Luftausströmers 11 gemäß Figur 1 dargestellt, bei welchem die Lamellen 21, 27 ausgehend von einer Ausgangsposition gemäß Figur 3 nach links geschwenkt sind. In dieser Endposition ist beispielsweise der Führungszapfen 32 innerhalb der Führungsnut 39 bis zum rechten Ende in der Führungsnut 39 verfahren. In einer solchen Endlage kann beispielsweise ein Schwenkbereich von -40° eingenommen werden.

In Figur 8 ist eine schematische Schnittansicht des Luftausströmers 11 gemäß Figur 1 dargestellt, bei dem die Lamellen 21, 22 gegenüber Figur 6 in entgegengesetzter Richtung geschwenkt sind. Beispielsweise um einen Schwenkbereich von 40° gegenüber der Ausgangsposition 26 in Figur 3.

Aus dem Vergleich der beiden Figuren 7 und 8 geht hervor, dass durch eine Verfahrbewegung der Führungsschiene 36 eine gleichzeitige Änderung der Lamellen 21, 27 erfolgt und die Lamellen 21, 27 sowohl in einer neutralen Position und/oder einer Ausgangsposition 26 als auch in den beiden Schwenkbereichen gemäß Figur 6 und 7 immer parallel ausgerichtet bleiben.

Die Einstellvorrichtung 24 kann dabei derart betätigt werden, dass das Bedienelement 34 beispielsweise eine horizontal zur Luftaustrittsöffnung ausgerichtete Verschiebebewegung durchführt und dementsprechend die Lamellen 21, 27 schwenkt. Alternative Ansteuerungsmöglichkeiten können ebenso vorgesehen sein, wobei dann zwischen dem Bedienelement 34 und dem Steuerzapfen 32 entsprechende Übersetzungsgetriebe, Gestänge oder Antriebseinrichtungen vorgesehen sind.

In Figur 9 ist schematisch vergrößert die Einstellvorrichtung 24 dargestellt. In der Führungsschiene 36 sind in einer Vertiefung 41 mehrere Schieber 35 verfahrbar entlang der Vertiefung 41 aufgenommen. Diese Schieber 35 weisen ein Koppelelement 42 auf, welches den Steuerzapfen 32, beziehungsweise die Führungszapfen 37 aufnimmt. Dieses Koppelelement 42 ist als U-förmige Gabel ausgebildet, so dass durch eine einfache Anordnung des Steuerzapfens 32 beziehungsweise Führungszapfen 37 eine Ansteuerung der Schwenkbewegung der Lamellen 21, 27 ermöglicht ist.

Jeder der beiden beispielhaft dargestellten Schieber 35 ist in einer lösbaren Rastposition 45 in der Führungsschiene 36 angeordnet. Der Abstand der lösbaren Rastpositionen 45 zueinander entspricht dem Abstand der Schwenkachsen 38 der Lamellen 21, 27. In dieser lösbaren Rastposition 45 ist ein erstes Rastelement 46 vorgesehen, welches beispielsweise als ein Federelement ausgebildet ist. Dies wirkt einem zweiten Rastelement 47, welches am Scheiber 35 fixiert ist, zusammen und bildet eine lösbare Rastverbindung. Sofern über das Bedienelement 34 eine Stellbewegung angesteuert wird, erfolgt eine Verfahrbewegung des Steuerzapfens 32, wobei die Verfahrbewegung auf den Schieber 35 übertragen wird. Aufgrund der lösbaren Rastverbindung wird diese Steuerbewegung auf die gesamte Führungsschiene 36 übertragen, so dass diese innerhalb einer Aufnahme im Boden 23 des Gehäuses 12 nach rechts oder links verfahren werden kann, um die Schwenkposition gemäß Figur 7 oder 8 als auch eine neutrale Position gemäß Figur 3 einzunehmen.

Die einzelnen Schieber 35 sind des Weiteren durch zumindest ein Stellelement 51 aus einer Formgedächtnislegierung miteinander verbunden. Dieses Stellelement 51 ist beispielsweise als ein Draht ausgebildet. Alternativ können auch mehrere Drähte oder ein Drahtbündel gemeinsam das Stellelement 51 bilden. Als Formgedächtnislegierung können beispielsweise KRYO-Werkstoffe, insbesondere Nickel/Titan oder Nickel/Titan/Kupfer eingesetzt werden. Ebenso können weitere allgemein bekannte Formgedächtnislegierungen eingesetzt werden.

Das Stellelement 51 ist über einen festen Angriffspunkt 53 mit dem Schieber 35 verbunden. Im Bereich des Angriffspunktes 53 kann zusätzlich noch eine Isolierhülse 54 oder auch eine Schutzhülse vorgesehen sein, um beim Fixieren des Stellelementes 51 zum Schieber dieses nicht zu beschädigen. Bevorzugt erstreckt sich ein Stellelement 51 entlang allen Schiebern 35, die von der Führungsschiene 36 aufgenommen sind. Am jeweiligen Ende der Führungsschiene 36 ist das Stellelement 51 mit einem elektrischen Kabel kontaktierbar oder verbunden, welches zu einer Steuereinrichtung 52 führt. Die Steuerungseinrichtung 52 kann durch ein Bedienelement betätigt werden, um die diffuse Luftströmung anzusteuern, beziehungsweise ein und aus zu schalten.

Das Stellelement 51 wird über ein Bedienelement, insbesondere Schalter, durch eine Bestromung aktiviert. Dabei erfolgt eine Verkürzung der freien Länge des Stellelementes 51 zwischen zwei Schiebern 35. Die lösbare Rastposition 45 ist bezüglich der Haltekraft beziehungsweise Lösekraft derart eingestellt, dass bei einer Bestromung des Stellelementes 51 und dessen Verkürzung die lösbare Rastverbindungen 45 sich lösen. Dadurch wird eine Verfahrbewegung des Schiebers 35 in der Führungsschiene 36, insbesondere in der Vertiefung 41, angesteuert und der beziehungsweise die Schieber 35 verlassen dabei die lösbare Rastposition.

In Figur 10 ist eine schematische Schnittansicht des Luftausströmers 11 gemäß Figur 1 dargestellt, bei welcher die Lamellen 21, 27 für eine diffuse Luftausströmung ausgerichtet sind. Diese Anordnung der Lamellen 21, 27 wird durch die Bestromung des zumindest einen Stellelementes 51 aus der Formgedächtnislegierung angesteuert. Beispielsweise ist die Steuerlamelle 27 mit einer höheren Lösekraft in ihrer mittigen Position gehalten als die benachbarten Lamellen 21. Durch die Verkürzung des Stellelementes 51 wird beispielsweise die erste rechte und linke benachbarte Lamelle 21 mit einem Öffnungswinkel von beispielsweise 11° zur Steuerlamelle 27 eingestellt. Da sich bei der zweiten benachbarten Lamelle 21 der Stellweg durch zwei Verkürzungen der freien Länge des Stellelementes 51 aufsummieren, kann dadurch beispielsweise der Winkel von 22° eingestellt werden. Analoges gilt bei der äußersten Lamelle, so dass beispielsweise ein Winkel von 33° eingestellt werden kann.

Die Einstellung der Größe des Winkels der Lamellen 21, 27 erfolgt in Abhängigkeit der freien Länge des Stellelementes 51 zwischen den Schiebern und/oder aufgrund der Auswahl der Formgedächtnislegierung und/oder der Ansteuerung der Formgedächtnislegierung.

In Figur 11 ist schematisch vergrößert die Anordnung des Schiebers 35 der Steuerlamelle 27 sowie zwei dazu benachbarte Lamellen 21 dargestellt, welche durch die Bestromung des zumindest einen Stellelementes 51 aus der Ausgangsposition in eine diffuse Position übergeführt sind. Durch die Verkürzung des Stellelementes 51 ist der rechte und linke benachbarte Schieber 35 der Lamelle 21 jeweils in Richtung zur Steuerlamelle 27 verfahren, wodurch sich aufgrund der im Gehäuse 12 fest vorgesehenen Schwenkachsen 38 der Lamellen 21 eine Winkelstellung der benachbarten Lamellen 21 zur Steuerlamelle 27 ergibt, wie dies Figur 10 zeigt.

Zur Rückstellung der Lamellen 21, 27 aus der diffusen Luftaustrittsposition in eine neutrale Position wird die Bestromung des zumindest einen Stellelementes 51 abgeschalten. Vorteilhafterweise werden die Schieber 35 durch ein nicht näher dargestelltes Rückstellelement, welches ebenfalls zwischen zwei benachbarten Schiebern 35 vorgesehen ist, wieder in ihre lösbare Rastposition 45 zurückgesetzt. Alternativ kann die Rückstellung auch durch das Formgedächtniselement und/oder ein weiteres Formgedächtniselement erfolgen. Danach kann wahlweise eine Schwenkbewegung aller Lamellen 21, 27 mit der Einstellvorrichtung 24 oder zumindest mit dem Stellelement 51 angesteuert werden.

## Patentansprüche

1. Luftausströmer mit einem Gehäuse (12), mit mehreren Lamellen (21, 27), die horizontal oder vertikal verlaufen und schwenkbar in dem Gehäuse (12) angeordnet und zu einer Luftaustrittsöffnung (17) im Gehäuse (12) ausgerichtet sind, wobei die Lamellen (21, 27) durch eine Einstellvorrichtung (24) gemeinsam und gleich ausgerichtet durch eine Schwenkbewegung aus einer Ausgangsposition (26) in eine Schwenkposition zur Änderung der Ausströmrichtung ansteuerbar sind, **dadurch gekennzeichnet, dass** die Lamellen (21, 27) unabhängig von der Ansteuerung der Einstellvorrichtung (24) mit zumindest einem Stellelement (51) aus einer Formgedächtnislegierung zur Einstellung einer diffusen Luftströmung ansteuerbar sind.

2. Luftausströmer nach Anspruch 1, **dadurch gekennzeichnet, dass** die Lamellen (21, 27) ausgehend von einer Ausgangsposition (26) durch das zumindest eine Stellelement (51) aus der Formgedächtnislegierung in die Position für die diffuse Luftausströmung ansteuerbar ist, wobei ausgehend von einer mittigen Lamelle oder einer Steuerlamelle (27) die erste rechts oder links benachbarte Lamelle (21) in einem gegenüber der parallelen Ausrichtung zur Steuerlamelle (27) vergrößerten Öffnungswinkel ausgerichtet ist und die zweite rechts und links benachbarte Lamelle (21) zur Steuerlamelle (27) eine gegenüber der ersten rechts und links benachbarten Lamelle (21) zur Steuerlamelle (27) wiederum in einem vergrößerten Öffnungswinkel ausgerichtet wird.

3. Luftausströmer nach Anspruch 1 oder 2, **dadurch gekennzeichnet, dass** die Einstellvorrichtung (24) eine Führungsschiene (36) umfasst, in der ein mit jeweils einer Lamelle (21, 27) gekoppelter Schieber (35) aufgenommen ist und die Schieber (35) korrespondierend zum Abstand der Lamellen (21, 27) im Gehäuse (12) in einer lösbaren Rastposition (45) in der Führungsschiene (36) angeordnet sind.

4. Luftausströmer nach einem der vorhergehenden Ansprüche, **dadurch gekennzeichnet, dass** jeder Schieber (35) ein Koppelelement (42), insbesondere eine gabelförmige Aufnahme, aufweist, in dem ein an einem Endabschnitt der Lamelle (21, 27) angeordneter Zapfen (32, 37) geführt ist.

5. Luftausströmer nach einem der vorhergehenden Ansprüche, **dadurch gekennzeichnet, dass** ein Bedienelement (34) der Einstellvorrichtung (24) zur Änderung der Ausströmrichtung eine Verschiebebewegung der Führungsschiene (36) vorzugsweise parallel zur Luftaustrittsöffnung (17), ansteuert.

6. Luftausströmer nach einem der vorhergehenden Ansprüche, **dadurch gekennzeichnet, dass** an einer mittigen Lamelle oder Steuerlamelle (27) ein Steuerzapfen (32) vorgesehen ist, an welchem das Bedienelement (34) der Einstellvorrichtung (24) angreift und durch eine Verschiebe- oder Drehbewegung des Bedienelementes (34) die Verschiebebewegung der Führungsschiene (36) über den Steuerzapfen (32) und den daran angreifenden Schieber (35) angesteuert ist.

7. Luftausströmer nach einem der vorhergehenden Ansprüche, **dadurch gekennzeichnet, dass** das zumindest eine Stellelement (51) aus der Formgedächtnislegierung mit oder zwischen zwei oder mehreren Schiebern (35) der Führungsschiene (36) gekoppelt ist.

8. Luftausströmer nach einem der vorhergehenden Ansprüche, **dadurch gekennzeichnet, dass** das zumindest eine Stellelement (51) aus der Formgedächtnislegierung sich entlang aller Schieber (35) in der Führungsschiene (36) erstreckt und jeder Schieber (35) durch einen festen Angriffspunkt (53) mit dem zumindest einen Stellelement (51) aus der Formgedächtnislegierung verbunden ist.

9. Luftausströmer nach einem der vorhergehenden Ansprüche, **dadurch gekennzeichnet, dass** der Schieber (35) ein erstes Rastelement (47) aufweist, welches mit einem zweiten Rastelement (46), insbesondere einem Federelement, zusammenwirkt und eine lösbare Rastverbindung in der lösbaren Rastposition (45) zur Führungsschiene (36) bildet.

10. Luftausströmer nach einem der vorhergehenden Ansprüche, **dadurch gekennzeichnet, dass** eine freie Länge des Stellelementes (51) aus der Formgedächtnislegierung zwischen zwei Schiebern (35) bei einer Aktivierung des Stellelementes (51) aus der Formgedächtnislegierung sich verkürzt und zumindest einen Schieber (35) aus seiner lösbaren Rastposition (45) herausführt.

11. Luftausströmer nach einem der vorhergehenden Ansprüche, **dadurch gekennzeichnet, dass** der Schieber (35) einer mittigen Lamelle oder einer Steuerlamelle (27) eine lösbare Rastverbindung (45) mit einer höheren Lösekraft oder einem höheren Lösemoment als die lösbare Rastverbindung (45) der benachbarten Schieber (35) aufweist, welche die zur mittigen Lamelle oder Steuerlamelle (27) benachbarten Lamellen (21) ansteuern.

12. Luftausströmer nach Anspruch 1 bis 10, **dadurch gekennzeichnet, dass** der Schieber (35) einer mittigen Lamelle oder einer Steuerlamelle (27) eine kraft- und/oder formschlüssige Verbindung mit dem Stellelement (51) aufweist.

13. Luftausströmer nach einem der vorhergehenden Ansprüche, **dadurch gekennzeichnet, dass** zwischen zwei Schiebern (35) ein Rückstellelement, insbesondere Federelement, vorgesehen ist.

## Claims

1. Air ejector comprising a housing (12), having a plurality of lamellae (21, 27) which extend horizontally or vertically and are arranged pivotably in the housing (12) and orientated with respect to an air outlet opening (17) in the housing (12), the lamellae (21, 27) being actuable jointly and in the same orientation by means of an adjustment device (24) by way of a pivot movement from an initial position (26) into a pivoted position to change the ejection direction, **characterised in that** the lamellae (21, 27) can be actuated independently of the actuation of the adjustment device (24) using at least one control element (51) made of a shape-memory alloy to set a diffuse airflow.

2. Air ejector according to claim 1, **characterised in that** the lamellae (21, 27), starting from an initial position (26), are actuable by the at least one control element (51) made of the shape-memory alloy into the position for the diffuse air ejection, the first adjacent lamella (21) to the left or right, starting from a central lamella or control lamella (27), being orientated at an increased opening angle by comparison with the parallel orientation of the control lamella (27), and the second adjacent lamella (21) to the right and left of the control lamella (27) in turn being orientated at an increased opening angle by comparison with the first adjacent lamella (21) to the right and left of the control lamella (27).

3. Air ejector according to either claim 1 or claim 2, **characterised in that** the adjustment device (24) comprises a guide rail (36), in which a slider (35) coupled to each lamella (21, 27) is received, and the sliders (35) being arranged in the guide rail (36) in a releasable latching position (45) in a manner corresponding to the spacing of the lamellae (21, 27) in the housing (12).

4. Air ejector according to any of the preceding claims, **characterised in that** each slider (35) has a coupling element (42), in particular a fork-shaped socket, in which a pin (32, 37) arranged on an end portion of the lamella (21, 27) is guided.

5. Air ejector according to any of the preceding claims, **characterised in that** an operating element (34) of the adjustment device (24) actuates a displacement movement of the guide rail (36), preferably parallel to the air outlet opening (17), to change the ejection direction.

6. Air ejector according to any of the preceding claims, **characterised in that** a control pin (32), on which the operating element (34) of the adjustment device (24) acts, is provided on a central lamella or control lamella (27), and, by way of a displacement or rotation movement of the operating element (34), the displacement movement of the guide rail (36) is actuated via the control pin (32) and the slider (35) which acts thereon.

7. Air ejector according to any of the preceding claims, **characterised in that** the at least one control element (51) made of the shape-memory alloy is coupled to or between two or more sliders (35) of the guide rail (36).

8. Air ejector according to any of the preceding claims, **characterised in that** the at least one control element (51) made of the shape-memory alloy extends along all of the sliders (35) in the guide rail (36), and each slider (35) is connected via a fixed action point (53) to the at least one control element (51) made of the shape-memory alloy.

9. Air ejector according to any of the preceding claims, **characterised in that** the slider (35) has a first latch element (47), which cooperates with a second latch element (46), in particular a spring element, and forms a releasable latch connection in the releasable latching position (45) with respect to the guide rail (36).

10. Air ejector according to any of the preceding claims, **characterised in that**, when the control element (51) made of the shape-memory alloy is activated, a free length of the control element (51) made of the shape-memory alloy between two sliders (35) becomes shorter, and guides at least one slider (35) out of the releasable latching position (45) thereof.

11. Air ejector according to any of the preceding claims, **characterised in that** the slider (35) of a central lamella or control lamella (27) has a releasable latch connection (45) having a higher release force or a higher release torque than the releasable latch connection (45) of the adjacent sliders (35), which actuate the lamellae (21) adjacent to the central lamella or control lamella (27).

12. Air ejector according to claims 1 to 10, **characterised in that** the slider (35) of a central lamella or control lamella (27) has a positive and/or non-positive connection to the control element (51).

13. Air ejector according to any of the preceding claims, **characterised in that** a restoring element, in particular a spring element, is provided between two sliders (35).

## Revendications

1. Diffuseur d'air avec un boîtier (12), avec plusieurs lamelles (21, 27) disposées horizontalement ou verticalement et pivotantes dans le boîtier (12) et alignées par rapport à une ouverture de sortie d'air (17) dans le boîtier (12), les lamelles (21, 27) pouvant être commandées conjointement par un dispositif de réglage (24) et de même alignées par un mouvement de pivotement à partir d'une position initiale (26) dans une position pivotante pour changer la direction de sortie, **caractérisé en ce que** les lamelles (21, 27) peuvent être commandées indépendamment de la commande du dispositif de réglage (24) avec au moins un élément de réglage (51) en alliage à mémoire de forme pour le réglage d'un flux d'air diffus.

2. Diffuseur d'air selon la revendication 1, **caractérisé en ce que** les lamelles (21, 27) peuvent être commandées à partir d'une position initiale (26) par au moins un élément de réglage (51) en alliage à mémoire de forme dans la position pour le flux d'air diffus, sachant qu'en partant d'une lamelle centrale ou d'une lamelle de commande (27), la première lamelle (21) adjacente à gauche ou à droite est alignée dans un angle d'ouverture agrandi, comparé à l'alignement parallèle par rapport à la lamelle de commande (27), et que la deuxième lamelle (21) adjacente, côté gauche et côté droit, à la lamelle de commande (27), est alignée, à son tour, dans un angle d'ouverture agrandi, comparé à la première lamelle (21), adjacente, à gauche et à droite, par rapport à la lamelle de commande (27).

3. Diffuseur d'air selon la revendication 1 ou 2, **caractérisé en ce que** le dispositif de réglage (24) comprend un rail de guidage (36), dans lequel est logé un coulisseau (35) couplé avec une lamelle (21, 27) chacun et **en ce que** les coulisseaux (35) sont disposés dans le rail de guidage (36) dans une position d'enclenchement (45) libérable, en fonction de l'espacement des lamelles (21, 27), dans le boîtier (12).

4. Diffuseur d'air selon l'une des précédentes revendications, **caractérisé en ce que** chaque coulisseau (35) comporte un élément de couplage (42), en particulier un logement en forme de fourche, dans lequel est guidée une cheville (32, 37) disposée au niveau d'une extrémité de la lamelle (21, 27).

5. Diffuseur d'air selon l'une des précédentes revendications, **caractérisé en ce qu'**un élément de commande (34) du dispositif de réglage (24) commande, pour changer la direction de sortie, un mouvement de déplacement du rail de guidage (36), de préférence parallèlement à l'ouverture de sortie d'air (17).

6. Diffuseur d'air selon l'une des précédentes revendications, **caractérisé en ce qu'**au niveau d'une lamelle centrale ou lamelle de commande (27), une cheville de commande (32) est prévue, au niveau de laquelle l'élément de commande (34) du dispositif de commande (24) vient en prise et ce qu'un mouvement de rotation ou de déplacement de l'élément de commande (34) commande le mouvement de déplacement du rail de guidage (36) par le biais de la cheville de commande (32) et le coulisseau (35) venant en prise à ce niveau.

7. Diffuseur d'air selon l'une des précédentes revendications, **caractérisé en ce qu'**au moins un élément de réglage (51) en alliage à mémoire de forme est couplé avec ou entre deux ou plusieurs coulisseaux (35) du rail de guidage (36).

8. Diffuseur d'air selon l'une des précédentes revendications, **caractérisé en ce qu'**au moins un élément de réglage (51) en alliage à mémoire de forme s'étend le long de tous les coulisseaux (35) dans le rail de guidage (36) et **en ce que** chaque coulisseau (35) est relié par un point d'engagement (53) fixe avec au moins un élément de réglage (51) en alliage à mémoire de forme.

9. Diffuseur d'air selon l'une des précédentes revendications, **caractérisé en ce que** le coulisseau (35) comporte un premier élément d'enclenchement (47) qui concoure avec un deuxième élément d'enclenchement (46) en particulier un élément ressort, et forme une liaison d'enclenchement libérable dans la position d'enclenchement libérable (45) concernant le rail de guidage (36).

10. Diffuseur d'air selon l'une des précédentes revendications, **caractérisé en ce qu'**une longueur libre de l'élément de réglage (51) en alliage à mémoire de forme diminue entre deux coulisseaux (35) lors d'une activation de l'élément de réglage (51) en alliage à mémoire de forme et fait sortir au moins un coulisseau (35) de sa position d'enclenchement (45) libérable.

11. Diffuseur d'air selon l'une des précédentes revendications, **caractérisé en ce que** le coulisseau (35) d'une lamelle centrale ou d'une lamelle de commande (27) comporte une position d'enclenchement (45) libérable avec une force de desserrage plus élevée ou un couple de desserrage plus élevé que la position d'enclenchement (45) libérable des coulisseaux (35) contigus, qui commandent les lamelles (21) adjacentes à la lamelle centrale ou lamelle de commande (27).

12. Diffuseur d'air selon la revendication 1 à 10, **caractérisé en ce que** le coulisseau (35) d'une lamelle centrale ou d'une lamelle de commande (27) comporte une liaison à engagement positif et/ou à adhérence, avec l'élément de réglage (51).

13. Diffuseur d'air selon l'une des précédentes revendications, **caractérisé en ce qu'**entre deux coulisseaux (35), il est prévu un élément de rappel, en particulier un élément ressort.
